# EUROPEAN PATENT APPLICATION

(11) **EP 4 847 193 A1**
(43) Date of publication of application: **02.12.2026**
(21) Application number: 26180725.9
(22) Date of filing: 22.05.2026
(51) Int. Cl.: B23Q 3/06, B23P 9/02, B23P 9/04, B23Q 1/66, B23Q 3/04, C21D 7/08, C22F 1/04, B24B 39/00

(54) **FIXTURE SYSTEM WITH SURFACE TREATMENT**

(30) Priority: 27.05.2025 US 202519219666
(71) Applicant: RTX Corporation, Farmington, CT 06032 (US)
(72) Inventor: KENNEDY, Matthew B., Vernon, 06066 (US); BERGETHON, Richard B., Holt, 48842 (US); FENTRESS, Eric M., East Hampton, 06424 (US); BEDARD, Benjamin, Manchester, 06042 (US); GESCH, Michael Thomas, Marshall, 49068 (US); EL-WARDANY, Tahany, Vernon, 06066 (US); BARNAT, Krzysztof, Berlin, 06037 (US)
(74) Representative: Dehns

(57) **Abstract**

A system (50) for surface treatment of a workpiece (10), having a fixture (52) for holding a workpiece (10) having surfaces (16, 18) to receive surface treatment; a robot (54) having a robot arm (56) mounted relative to the fixture (52); and a tool (58) mounted to the robot arm (56) for applying the surface treatment to the workpiece (10), wherein the fixture (52) secures the workpiece (10) while leaving the surfaces (16, 18) exposed to receive the surface treatment.

## Description

### FIELD

The present invention relates to the manufacture of fan components such as hollow fan blades of gas turbine engines.

### BACKGROUND

Mechanical surface treatments are applied to alter surface properties and enhance fatigue strength and life of various components of industrial machines such as, as one non-limiting example, hollow fan blades of gas turbine engines. Deep rolling is one such mechanical surface treatment and is a process whereby a roller is used to roll the surface of a workpiece under a controlled load, or pressure, and speed. The rolling pressure causes a small amount of plastic deformation on the surface and sub-surface area of the component, inducing a deep layer of compressive residual stress.

During rolling, the effect of gravity on the workpiece should be taken into account, especially on workpieces that are flexible such as hollow fan blades. Further, it is useful to be able to treat all surfaces of the component that can benefit from the surface treatment. This is especially true with components that have complex features.

### SUMMARY OF THE INVENTION

According to an aspect of the present invention, a system for surface treatment of a workpiece comprises a fixture for holding a workpiece having surfaces to receive surface treatment; a robot having a robot arm mounted relative to the fixture; and a tool mounted to the robot arm for applying the surface treatment to the workpiece, wherein the fixture secures the workpiece while leaving the surfaces exposed to receive the surface treatment.

Optionally, and in accordance with the above, the workpiece is a fan blade having a root with a front face, a rear face, a bottom surface and an airfoil, and wherein the fixture comprises a toggle clamp to clamp the root between the front face and the rear face.

Optionally, and in accordance with any of the above, the fixture further comprises a vacuum source for applying a vacuum to the bottom surface of the root.

Optionally, and in accordance with any of the above, the fixture further comprises a clamp for clamping against opposed sides of the airfoil, whereby the airfoil is securely held by the fixture.

Optionally, and in accordance with any of the above, the toggle clamp comprises a base having a root contact surface and a toggle spaced from and adjustable relative to the root contact surface to secure the root therebetween.

Optionally, and in accordance with any of the above, the base defines a surface configured to match the bottom surface of the root, and wherein the surface has an opening communicated with the vacuum source to apply vacuum to the bottom surface of the root.

Optionally, and in accordance with any of the above, the clamp comprises pivoting arms configured to clamp against opposed sides of the airfoil, and a lock to secure the arms in a clamping position relative to the airfoil.

Optionally, and in accordance with any of the above, the fixture is configured to hold the workpiece in a 3-point hold.

Optionally, and in accordance with any of the above, the 3-point hold comprises at least one hold point above a platform of the workpiece, and at least one hold point below the platform of the workpiece.

Optionally, and in accordance with any of the above, the robot arm is a 6-axis robot arm.

Optionally, and in accordance with any of the above, the fixture and the robot are mounted to a positioning table.

Optionally, and in accordance with any of the above, the system further comprises a force controller sensor configured to apply a constant load from the robot arm through the tool to the workpiece.

Optionally, and in accordance with any of the above, the tool comprises a deep rolling tool.

Optionally, and in accordance with any of the above, the system further comprises a camera positioned to confirm positioning of the workpiece relative to the fixture.

Optionally, and in accordance with any of the above, the system further comprises a processor configured with a decision making algorithm and communicated with the fixture and the robot arm whereby commands to correct position of the workpiece relative to the fixture can be sent to at least one of the robot arm and the fixture.

According to another aspect of the present invention, a method for surface treating a workpiece, comprises mounting the workpiece in a fixture, the workpiece having surfaces to receive surface treatment; moving a robot having a robot arm mounted relative to the fixture to position a tool mounted to the robot arm relative to the workpiece; and positioning the tool against the surfaces at a pressure selected to apply a desired surface treatment to the surfaces of the workpiece, with the workpiece secured in the with the surfaces exposed to receive the surface treatment.

Optionally, and in accordance with the above, the workpiece is a fan blade having a root with a front face, a rear face, a bottom surface and an airfoil, and wherein the fixture comprises a toggle clamp to clamp the root between the front face and the rear face with the surfaces of the fan blade exposed for surface treatment.

Optionally, and in accordance with any of the above, the surfaces comprise at least one of root areas below a platform of the fan blade, a blade edge at the platform of the fan blade, and combinations thereof.

Optionally, and in accordance with any of the above, the surfaces comprise both the root areas and the blade edge, and wherein robot arm can position the tool to all of the surfaces without repositioning the workpiece in the fixture.

Optionally, and in accordance with any of the above, the fixture holds the workpiece in a 3-point hold.

The foregoing features and elements may be combined in various combinations without exclusivity, unless expressly indicated otherwise. These features and elements, as well as the operation thereof, will become more apparent in light of the following description and the accompanying drawings. It should be appreciated that the following description and drawings are intended to be exemplary in nature and non-limiting.

### BRIEF DESCRIPTION OF THE DRAWINGS

The subject matter of the present invention is particularly pointed out and distinctly claimed in the concluding portion of the specification. A more complete understanding of the present invention, however, may best be obtained by referring to the detailed description and claims when considered in connection with the drawing figures, wherein like numerals denote like elements.
FIG. 1 illustrates a portion of a fan blade which can be a workpiece for the system and method of the invention;
FIGS. 2, 3 and 4 illustrate a portion of the root of the fan blade that can receive a surface treatment;
FIGS. 5 and 6 illustrate another portion of the fan blade just above the platform that can receive a surface treatment;
FIG. 7 illustrates one embodiment of a system as disclosed herein for surface treatment of a workpiece;
FIG. 8 illustrates a 3-point hold of a fan blade in a fixture as disclosed herein;
FIG. 9 further illustrates the 3-point hold of FIG. 8 from a different perspective;
FIG. 10 illustrates a system as disclosed herein with a fan blade mounted and being surface treated by a tool held by a robot arm;
FIG. 11 illustrates further detail of a vacuum hold of a fixture as disclosed herein;
FIG. 12 illustrates a system as disclosed herein showing a fan blade clamped in the fixture and a tool exploded from a mounted position in the robot arm;
FIG. 13 illustrates a tool for the system as disclosed herein; and
FIG. 14 illustrates a plurality of different positions of a tool relative to the workpiece to show complete access to intended surfaces of the fan blade.

### DETAILED DESCRIPTION

The detailed description of embodiments herein makes reference to the accompanying drawings, which show embodiments by way of illustration. While these embodiments are described in sufficient detail to enable those skilled in the art to practice the invention, it should be understood that other embodiments may be realized and that logical, chemical, and mechanical changes may be made without departing from the spirit and scope of the invention. Thus, the detailed description herein is presented for purposes of illustration only and not for limitation. For example, any reference to singular includes plural embodiments, and any reference to more than one component or step may include a singular embodiment or step. Also, any reference to attached, fixed, connected or the like may include permanent, removable, temporary, partial, full and/or any other possible attachment option. Further, any steps in a method discussed herein may be performed in any suitable order or combination. Additionally, any reference to without contact (or similar phrases) may also include reduced contact or minimal contact. It should also be understood that unless specifically stated otherwise, references to "a", "an", or "the" may include one or more than one and that reference to an item in the singular may also include the item in the plural. Further, all ranges may include upper and lower values and all ranges and ratio limits disclosed herein may be combined.

Various components of industrial machines and systems are treated to improve their characteristics for intended use. These treatments can include surface treatments such as deep rolling and the like. In such processes, a roller can be used to roll the surface under a controlled load, or pressure, and speed. This can cause a small amount of plastic deformation on the surface and sub-surface area, including a deep layer of compressive residual stress. One type of component that can benefit from such treatments includes components of gas turbine engines such as fan blades, especially hollow fan blades.

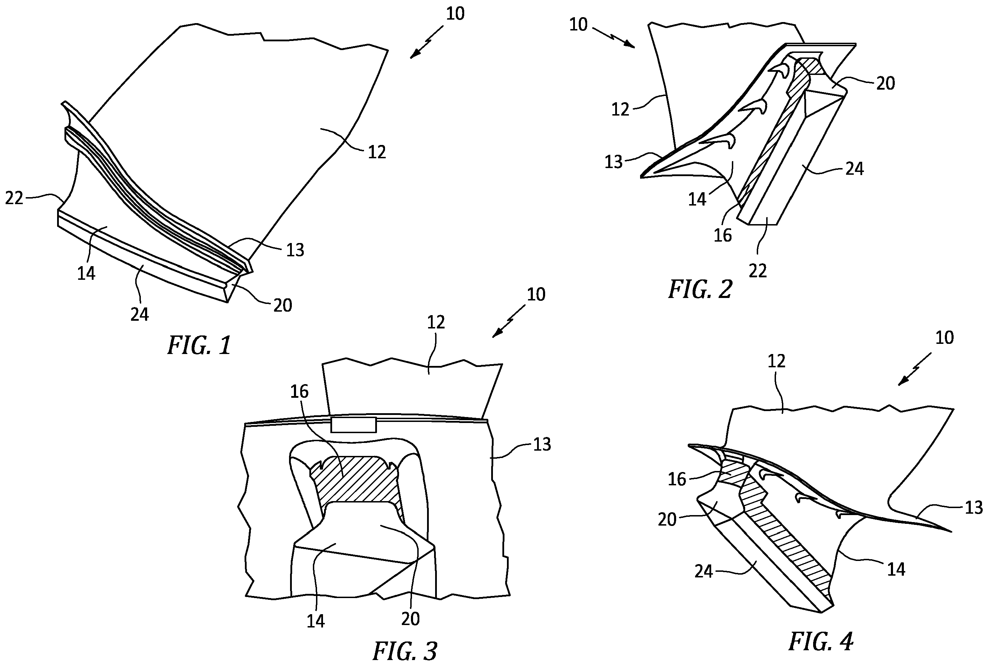

FIG. 1 shows an example of such a hollow fan blade 10 which can typically have an airfoil 12, a platform 13 and a root 14 extending downward from platform 13. Since hollow fan blade 10 has thin walls and an open or hollow interior, the component can be flexible and can be affected by gravity during rolling which can cause undesirable deformation during the processing. In addition, hollow fan blade 10 has areas which will be discussed below where it is desirable to be able to surface treat the component to provide desired properties. Referring to FIGS. 2-4, an area of root 14 wherein surface treatment is desirable is shown in shaded section 16 (cross-sectioned in FIGS. 1-4). Surface 16 should not be taken as being a physically separate portion of fan blade 10, it is shown in cross-hatching only to illustrate a non-limiting embodiment of where such surface treatment can be desirable. This section or surface 16 of root 14 is an area where deep rolling is desirable to provide that portion of the fan blade with better properties when mounted for example in a hub of a fan.

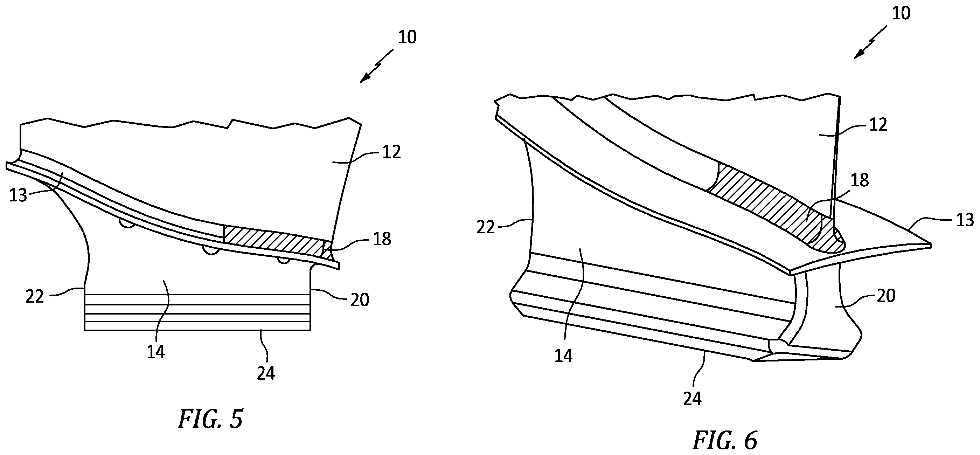

FIGS. 5 and 6 illustrate another section or surface 18 of fan blade 10 (cross-hatched in the drawings similarly to section 16), in this case just above platform 13, which also can benefit from deep rolling to provide better properties when the fan blade is put into service. Unfortunately, it can be challenging to fully support workpieces such as hollow fan blade 10 without obstructing one or more of surfaces 16, 18, which interferes with treatment of these surfaces as desired. Further, this difficulty is enhanced when trying to support hollow fan blade 10 in a manner whereby the surface treatments can be carried out without having to re-position the workpiece in a holder for different portions of the treatment.

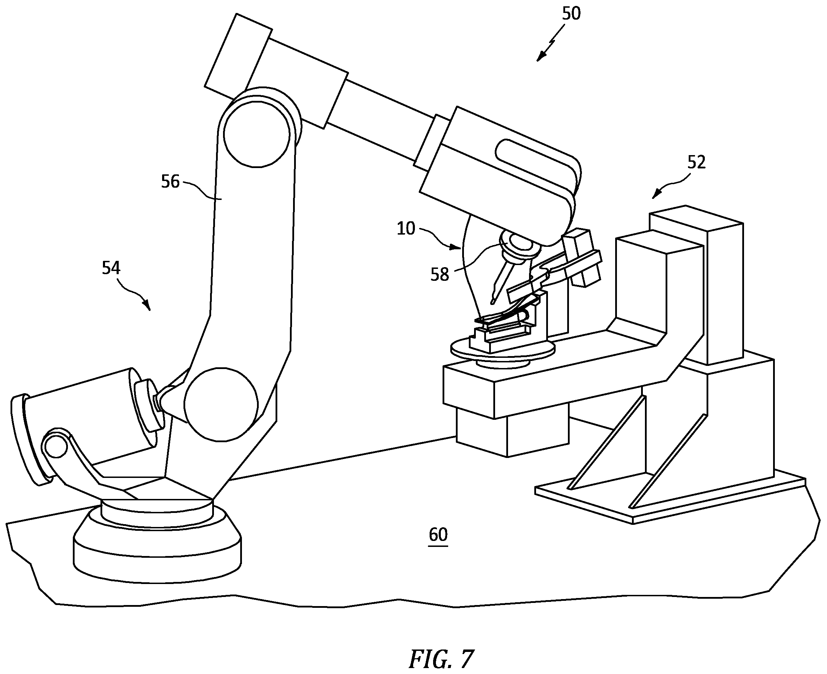

Still referring to FIGS. 1-6 collectively, it will be appreciated that root 14 has a forward face 20 and an aft face 22 as well as a bottom surface 24. Turning now to FIG. 7, a system 50 is described which has a fixture 52 that can be used to securely hold fan blade 10 such that a robot 54 with robot arm 56 holding a tool 58 can be used to apply surface treatment such as deep rolling to sections of fan blade such as surfaces 16, 18.

Still referring to FIG. 7, fixture 52 and robot 54 can be mounted to a work surface 60 such as any available work platform or table 60. This allows fixture 52 to be used to securely mount fan blade 10 and robot arm 56 to be controlled to access surfaces of fan blade 10 with tool 58 as desired without the need for repositioning the fan blade 10 during or part-way through the treatment.

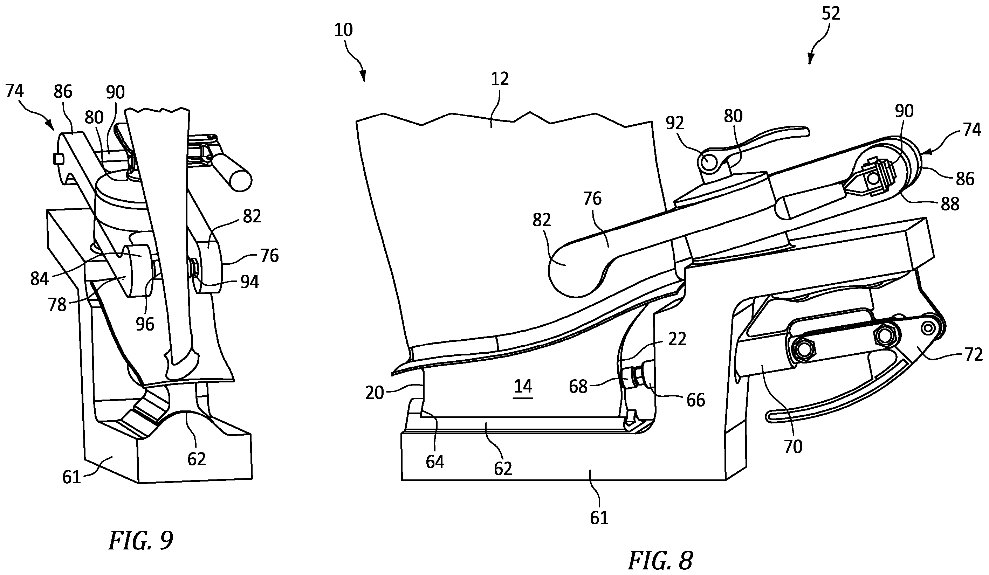

One non-limiting embodiment of fixture 52 is further described and illustrated in FIG. 8. As will be appreciated, fixture 52 allows for a 3-point hold on fan blade 10. Further, this 3-point hold can include at least one hold point below platform 13, and at least one hold point above platform 13, and this helps to keep fan blade 10 in proper position during surface treatment. Fixture 52 as shown in this configuration has a base 61 which is configured to receive root 14 of fan blade 10. Base 61 can have a surface 62 upon which bottom 24 of fan blade 10 can rest when mounted in fixture 52. At one end of surface 62, base 61 can have a contact surface 64 positioned to contact front face 20 of root 14. Contact surface 64 can be in the form of an upwardly extending surface or ledge against which front face 20 of root 14 can be positioned. In addition, fixture 52 can support a toggle clamp or bolt 66. The first of the three illustrated holding points is with toggle clamp 66 which can be moveably mounted in base 61 such that it can be moved toward and away from contact surface 64. In this way, a contact tip 68 of toggle clamp 66 can be contacted with a rear face 22 of fan blade 10 to clamp root 14 between surface 64 and contact tip 68. Any suitable mechanism can be used to move and secure toggle clamp 66 in position relative to contact surface 64 and root 14 secured in fixture 52 as desired. In this case, one non-limiting configuration is a housing 70 mounted in fixture 52 and having a mechanical linkage 72 configured to be manually operated to close toggle clamp 66 and contact tip 68 in place against a workpiece secured therein. It should be appreciated, especially from a consideration of FIGS. 2-6, that the toggle clamp assembly does not cover any of surfaces 16, 18 of fan blade 10, thereby leaving these surfaces open and accessible for surface treatment as desired.

A second point of hold of fixture 52 is a vacuum source which can be applied through base 61 to a bottom surface 24 of root 14 to hold fan blade 10 in position by vacuum, securely pressed against surface 62. Referring also to FIG. 9, a contour of both bottom surface 24 and matching surface 62 of base 61 can have a generally similar contour so that root 14 is not only held in place by vacuum, but also is held against side-to-side motion relative to base 61 by the matching contour. In the example illustrated, surface 62 has a groove or longitudinal slot defined therein, with holes through which vacuum can be applied. This structure is selected to reliably match bottom surface 24 of fan blade 10. It should be appreciated that both of these contact points are contacting fan blade 10 below platform 13. In addition, a third contact or clamping point is defined by a clamp assembly 74 (FIGS. 8-9) which can have a pair of clamp arms 76, 78 pivotably mounted at a pivot point 80. Pivot of arms 76, 78 around pivot point 80 allows arms 76, 78 to be closed against opposed surfaces of fan blade 10, specifically against airfoil 12 of fan blade 10, at a position which is above platform 13 such that the three points of contact to support fan blade 10 in fixture 52 are spaced both above and below platform 13 as desired. Mechanical closing structures can be used to position and hold arms 76, 78 in a position clamping airfoil 12. In the non-limiting embodiment of FIG. 8, each arm 76, 78 has a contact end 82, 84 for contacting airfoil 12, and has an opposed end 86, 88 which can be used or manipulated to pivot the arms around the pivot point. Further, in this configuration the mechanical closing mechanism can be a threaded or otherwise axially moveable pin 90 disposed through each of ends 86, 88 such that rotation of pin 90 adjusts spacing of ends 86, 88 and thereby also adjusts spacing of ends 82, 84 and clamping of airfoil 12 therebetween. Pin 90 can itself be provided with locking structure, or alternatively, a separate lock mechanism 92 can be provided, in this example at pivot point 80, again to firmly secure arms 76, 78 relative to airfoil 12 of fan blade 10 as desired.

As can best be seen in FIG. 9, arms 76, 78 of clamp 74 can have contact portions 94, 96, extending laterally toward each other to define contact portions that will contact airfoil 12.

It will be appreciated that each of the three points of contact defined by fixture 52 can be manually operated such as with the components of clamp 52 which are to be manually rotated, or can be operated by electric motor or the like, controlled by a microprocessor with suitable programming. In this regard, a number of sensors can be positioned within fixture 52 and robot 54 and robot arm 56 such that various aspects of a surface treatment process can be monitored and adjusted as needed. For example, sensors can be provided to determine the contact pressure between tool and surface of fan blade 10. Sensors can also be provided for example to monitor connection between the bottom surface 24 of the root 14 and the vacuum source. A suitable optic device such as a camera can also be positioned to check overall position of the workpiece relative to the fixture and robot/robot arm supporting the tool. Such a camera (not shown) could be positioned on fixture 52, or on robot arm 56, as two non-limiting examples of possible location. In any event, monitoring position of hollow fan blade 10 in fixture 52 can help to ensure proper treatment of fan blade 10 and, thereby, fewer unacceptable fan blades from the process.

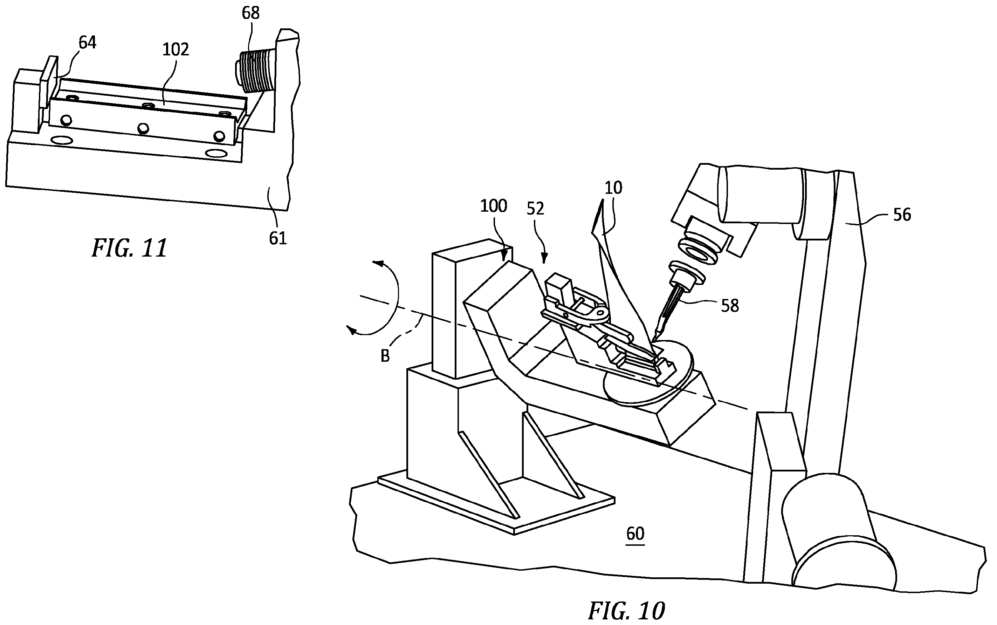

FIG. 10 illustrates a workpiece such as fan blade 10 mounted in a fixture 52 and a tool 58 in an exploded view relative to a robot arm 56. This further illustrates an aspect of this embodiment, wherein fixture 52 is mounted to table 60 through a pivotable mount 100 to help provide all degrees of mobility between tool 58 on robot arm 56 and a workpiece 10 in fixture 52. In this regard, pivotable mount 100 provides for pivot of fan blade 10 in mount 52 around an axis B as shown.

In another configuration, FIG. 11 further illustrates details of a vacuum holding member forming a portion of base 61 as discussed above. As shown, base 61 can define upstanding surface 64 as well as tip 68 of clamp 66. In this configuration, the vacuum source is defined as an opening 102 designed and configured to receive root 14 of fan blade 10, specifically to receive a bottom surface 24 and lower portion of root 14. In the configuration shown, the bottom of the root 14 of fan blade 10 would rest in opening 102 and be held there by vacuum.

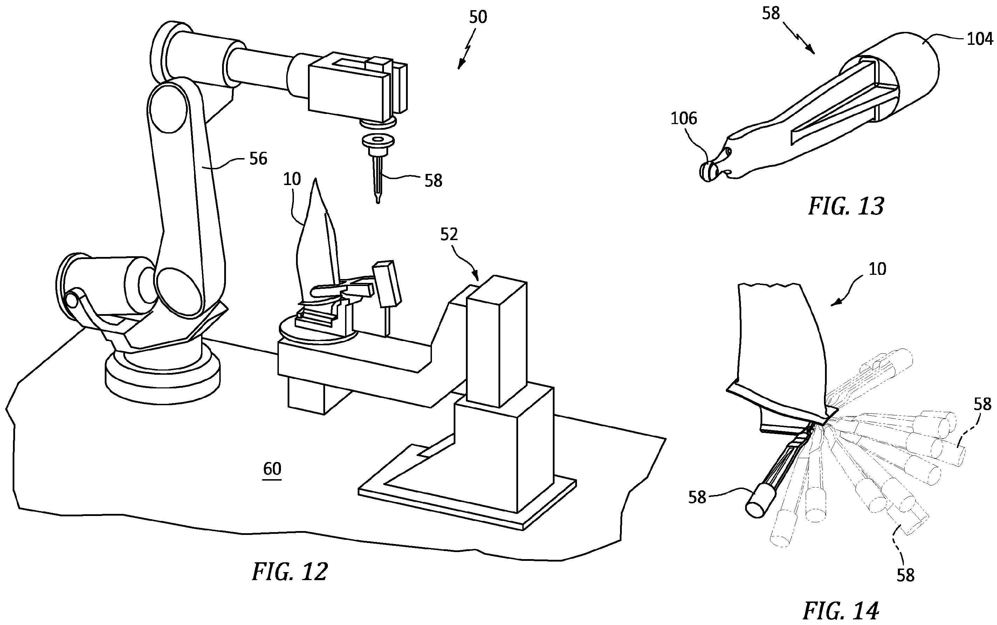

FIG. 12 shows yet another non-limiting configuration of system 50 as disclosed herein. System 50 is shown in a different position or pose of robot arm 56 and tool 58 relative to workpiece 10 held in fixture 52.

FIG. 13 illustrates one embodiment of a tool 58 as disclosed herein. In this case, tool 58 can have a mount portion 104 to be received within and held by an adjustable mount of robot arm according to this invention. Tool 58 in this configuration can also have a working end 106, in this case in the form of a rounded tip which can be worked against surfaces of hollow fan blade 10 as desired.

FIG. 14 illustrates how the configuration of the present invention can be used to contact a workpiece surface with tool 58 from a number of different positions made possible by the 6-axis robot arm and potentially moveable fixture as well. The plurality of positions as schematically illustrated in broken lines in numerous positions and can all be used to provide a desired level of surface treatment of a surface of and blade as disclosed herein.

In use, system 50 according to the invention can be used to secure a workpiece such a fan blade 10 in fixture 52. Guided by sensors and/or optics, robot 54 through robot arm 56 can now be operated to contact tool 58 against surfaces of fan blade 10 as desired, from any suitable angle or position, until the surface is sufficiently treated to provide the desired properties.

It will further be appreciated that the disclosed system involves the use of one robot, one fixture, and one tool system to provide the desired outcome. The robot can, as one non-limiting example, be a mid-size robot with maximum load of 500 pounds and a 750 kg allowable load positioning table, and a force controller sensor to apply constant normal load.

A specially designed fixture has been disclosed and helps to accommodate the flexibility of the HFB during rotation. This fixture incorporates multiple features that enable easy and precise positioning of the HFB, minimizing setup time and eliminating the need for frequent adjustments. The fixture is strategically designed to ensure that all surfaces requiring mechanical surface treatment remain fully accessible. This allows the deep rolling tool to contact all necessary areas without collision or the need to interrupt the RDR process to flip the blade for additional access. In addition, the secondary contact area (root underside) can be configured as a vacuum work holding system to ensure full contact between the blade root and the fixture base.

The roller tool 58 can be designed and checked for any collision with the fan blade surfaces. Further, a deep rolling path can be used that includes deep rolling of the edge curvature of a fan blade 10. A high system repeatability is provided and surface finish produced is within specification. Finally, utilization can be made of a camera as a vision sensor to check any anomalies and integrate decision making algorithms in the robot controller for direct adjustment of DR parameters or DR path for correcting the system.

The robotic deep rolling, or RDR, process, when applied with constant forces, generates a deep residual stress (RS) profile across the deep-rolled surfaces, significantly enhancing fatigue strength and extending the service life of the 30K HFB root. The introduction of compressive residual stresses also helps arrest corrosion on the root surfaces at an early stage.

The deep rolling as provided for herein ensures high-quality component production through continuous force and tool path monitoring, utilizing an integrated vision system for precision control. The process is cost-effective (and can reduce production cost by 50% with the generic fixture design), reducing capital cost as only one robot is used, as well as one fixture and one tool, thus requiring no post-processing while delivering defect-free material, excellent dimensional accuracy, and superior surface finish.

The foregoing description is exemplary of the subject matter of the subject matter disclosed herein. Various non-limiting embodiments are disclosed, however, one of ordinary skill in the art would recognize that various modifications and variations in light of the above teachings will fall within the scope of the appended claims. It is therefore to be appreciated that within the scope of the appended claims, the invention may be practiced other than as specifically described. Thus, the scope of the present claims is not specifically limited by the details of specific embodiments disclosed herein, but rather the claims define the full and reasonable scope of the invention.

## Claims

1. A system (50) for surface treatment of a workpiece (10), the system (50) comprising:
a fixture (52) for holding a workpiece (10) having surfaces (16, 18) to receive surface treatment;
a robot (54) having a robot arm (56) mounted relative to the fixture (52); and
a tool (58) mounted to the robot arm (56) for applying the surface treatment to the workpiece (10), wherein the fixture (52) secures the workpiece (10) while leaving the surfaces (16, 18) exposed to receive the surface treatment.

2. The system (50) of claim 1, wherein the workpiece (10) is a fan blade having a root (14) with a front face (20), a rear face (22), and a bottom surface (24), and an airfoil (12), and wherein the fixture (52) comprises a toggle clamp (66) to clamp the root (14) between the front face (20) and the rear face (22).

3. The system (50) of claim 2, wherein the toggle clamp (66) comprises a base (61) having a root contact surface (64) and a toggle spaced from and adjustable relative to the root contact surface (64) to secure the root (14) therebetween.

4. The system (50) of claim 3, wherein the base (61) defines a surface (62) configured to match the bottom surface (24) of the root (14), and wherein the surface (62) has an opening communicated with the vacuum source to apply vacuum to the bottom surface (24) of the root (14).

5. The system (50) of any of claims 2 to 4, wherein the fixture (52) further comprises a vacuum source for applying a vacuum to the bottom surface (24) of the root (14).

6. The system (50) of any of claims 2 to 5, wherein the fixture (52) further comprises a clamp (74) for clamping against opposed sides of the airfoil (12), whereby the airfoil (12) is securely held by the fixture (52), and wherein, optionally, the clamp (74) comprises pivoting arms (76) configured to clamp against opposed sides of the airfoil (12), and a lock (90, 92) to secure the arms (76) in a clamping position relative to the airfoil (12).

7. The system (50) of any preceding claim, wherein the fixture (52) is configured to hold the workpiece (10) in a 3-point hold, and wherein, optionally, the 3-point hold comprises at least one hold point above a platform (13) of the workpiece (10), and at least one hold point below the platform (13) of the workpiece (10).

8. The system (50) of any preceding claim, wherein:
the robot arm (56) is a 6-axis robot arm; and/or
the tool (58) comprises a deep rolling tool.

9. The system (50) of any preceding claim, wherein the fixture (52) and the robot (54) are mounted to a positioning table (60).

10. The system (50) of any preceding claim, further comprising a force controller sensor configured to apply a constant load from the robot arm (56) through the tool (58) to the workpiece (10).

11. The system (50) of any preceding claim, further comprising:
a camera positioned to confirm positioning of the workpiece (10) relative to the fixture (52); and/or
a processor configured with a decision making algorithm and communicated with the fixture (52) and the robot arm (56) whereby commands to correct position of the workpiece (10) relative to the fixture (52) can be sent to at least one of the robot arm (56) and the fixture (52).

12. A method for surface treating a workpiece (10), the method comprising:
mounting the workpiece (10) in a fixture (52), the workpiece (10) having surfaces (16, 18) to receive surface treatment;
moving a robot (54) having a robot arm (56) mounted relative to the fixture (52) to position a tool (58) mounted to the robot arm (56) relative to the workpiece (10); and
positioning the tool (58) against the surfaces (16, 18) at a pressure selected to apply a desired surface treatment to the surfaces (16, 18) of the workpiece (10), with the workpiece (10) secured in the fixture (52) with the surfaces (16, 18) exposed to receive the surface treatment.

13. The method of claim 12, wherein the workpiece (10) is a fan blade having a root (14) with a front face (20), a rear face (22), and a bottom surface (24), and an airfoil (12), and wherein the fixture (52) comprises a toggle clamp (66) to clamp the root (14) between the front face (20) and the rear face (22) with the surfaces (16, 18) of the fan blade (10) exposed for surface treatment.

14. The method of claim 13, wherein:
the surfaces (16, 18) comprise at least one of root areas below a platform (13) of the fan blade (10), a blade edge at the platform (13) of the fan blade (10), and combinations thereof; and optionally,
the surfaces (16, 18) comprise both the root areas and the blade edge, and the robot arm (56) can position the tool (58) to all of the surfaces (16, 18) without repositioning the workpiece (10) in the fixture (52).

15. The method of any of claims 12 to 14, wherein the fixture (52) holds the workpiece (10) in a 3-point hold.
